# EUROPEAN PATENT SPECIFICATION

(11) **EP 4 565 487 B1**
(45) Date of publication and mention of the grant of the patent: **06.05.2026**
(21) Application number: 23752016.8
(22) Date of filing: 25.07.2023
(51) Int. Cl.: B64D 45/00, B64C 25/60, F16F 9/06, F16F 9/48, B64C 25/12

(54) **AIRCRAFT LANDING GEAR SHOCK ABSORBER STRUT**
STOSSDÄMPFERSTREBE FÜR FLUGZEUGFAHRWERK
JAMBE D'AMORTISSEUR DE TRAIN D'ATTERRISSAGE D'AÉRONEF

(30) Priority: 04.08.2022 GB 202211391
(43) Date of publication of application: 11.06.2025
(73) Proprietor: Safran Landing Systems UK Limited, Gloucester Gloucestershire GL2 9QH (GB)
(72) Inventor: BENNETT, Ian, Cheltenham, Gloucestershire GL51 6AF (GB)
(74) Representative: Latham, Stuart Alexander
(86) International application number: PCT/GB2023/051962
(87) International publication number: WO 2024/028573

(56) References cited:
- EP-A2- 0 341 021
- US-A- 3 265 163
- US-A1- 2015 344 131

## Description

### Background to the Invention

It is common for an aircraft landing gear assembly to include a main hydraulic shock absorber strut having an upper end arranged to be pivotally coupled to the underside of the aircraft and a lower end coupled to a wheel and brake assembly.

Such shock absorber struts can comprise an outer cylinder and a sliding tube arranged to telescope relative to the outer cylinder. The shock absorber strut can be compressed and extended as the sliding tube moves relative to the outer cylinder. The two portions are coupled together to define a chamber containing oil and in some cases a gas. As the shock absorber is compressed, oil within the chamber is forced through damping orifices and, where gas is also provided, the gas is compressed, in order to absorb landing loads. The compressed gas serves as a spring to lengthen the shock absorber as applied external load decreases. Recoil damping orifices can be provided to restrict the flow of oil to the annulus as the shock absorber extends.

Such telescopic landing gear can be provided with an elongate metering pin mounted on the sliding tube to move with it, inside the chamber. A mating damping orifice is provided within the chamber, often supported on an orifice support tube. As the sliding tube moves relative to the outer cylinder, a control portion of the metering pin moves through the damping orifice. Variation in the diameter of the metering pin along the control portion varies the free space of the damping orifice through which oil can flow. Thus, the profile of the metering pin affects damping properties of the shock absorber based on shock absorber extension.

"Weight-on-wheels" is a term used in the art to refer to an operational phase of an aircraft when the weight of the aircraft is being support by its landing gear. Weight-on-wheels switches or sensors, also known in the art as "squat switches", are commonly used to indicate to aircraft systems via an electronic signal that the aircraft has transitioned from air to ground mode or vice-versa. This signal, which will be referred to as a "weight-on-wheels signal", can be used to enable lift dumpers or brakes to operate on fixed wing aircraft or can be used in the case of rotorcraft to indicate a change of control laws once in ground contact.

It is desirable to transmit the weight-on-wheels signal as soon as possible (consistent with reliability) so that lift dumpers for example can be deployed as early as possible to shorten landing distance.

A weight-on-wheels signal is typically triggered by proximity sensors or proximity switches, or by microswitches on older aircraft, driven by a mechanism related to strut closure i.e. extension state. Various mechanisms exist for the operation of the switch, but it is common to sense an initial angular movement of the upper torque link i.e. the upper link of the pivotable linkage which inhibits axial rotation of the lower cylinder or "sliding tube" of the shock absorber strut relative to the outer cylinder of the shock absorber strut.

Microswitches can be set to trigger at consistent movement but have several disadvantages. As such, microswitches largely been replaced by proximity sensors. However, proximity sensors have a tolerance range on their sensing i.e. variation in position between guaranteed activation and guaranteed deactivation. For commercial wide body aircraft it is common for the weight-on-wheels switch to not be guaranteed to trigger before about 25 to 30 mm of shock absorber closure has occurred.

Due to the inflation pressure of a shock absorber there is a minimum "breakout load" below which the shock absorber will not move. Thus, a weight-on-wheels transition can occur before it is sensed and the weight-on-wheels signal is transmitted to the aircraft systems.

EP3069994B1 and WO2021/019422 describe aircraft landing gear shock absorber struts.

US2015344131A1 describes a shock strut having multiple pistons and multiple chambers. In this manner, the shock strut may compress different lengths for different applied forces at different points during its stroke.

EP0341021A2 describes a hydraulic shock absorber suitable for use with an aircraft landing gear which includes a first casing member telescopically and sealingly engaged with a second casing member, the second casing member having a first section of reduced diameter in comparison to a second section and an oil reservoir defined by the first and second casing members, which is divided into two distinct volumes by a one way restrictor means attached to the second casing member. Further, the volume of the oil reservoir defined by the first casing member and the first section of the second casing member is further divided into two sections by a two way restrictor means.

US3265163A describes a shock absorber for a vehicle comprising: a support structure affixed to the vehicle; a first cylinder operatively connected to the support structure; second cylinder arranged to reciprocate in the first cylinder, the second cylinder containing a noncompressible fluid which is utilized to extend the a second cylinder in accordance with a pressurized compressible fluid in the first cylinder such that only a portion of the first cylinder contains the noncompressible fluid in the extended position; an adjustable metering means to meter the flow of noncompressible fluid into the first cylinder upon telescopic action of the second cylinder in the first cylinder; crush plate operatively connected to the first cylinder at the end opposite that mounted by the support structure; honeycomb member held between the crush plate and the support structure exteriorly of the first cylinder; and stop means connected to the second cylinder and arranged to contact the crush plate to compress the honeycomb upon the application of excessive loads.

The present inventor has devised a new type of aircraft landing gear shock absorber strut that can have one of more of the following advantages relative to known aircraft landing gear shock absorber struts:
- faster and/or more reliable sensing of a weight-on-wheels condition upon landing
- a reduction in mass of the aircraft landing gear shock absorber strut
- a reduction in complexity of the aircraft landing gear shock absorber strut
- a reduction in initial landing impact load

### Summary of Invention

According to a first aspect of the invention, there is provided an aircraft landing gear shock absorber strut comprising:
an outer cylinder having an inner surface defining a cylinder bore extending into the outer cylinder from a first axial face of the outer cylinder, the cylinder bore defining an oleo chamber for containing pressurised oleo-pneumatic shock absorber fluid;
a sliding tube including a hollow tube member coupled to first piston head, the hollow tube member defining a tube bore, the first piston head being movably mounted within the cylinder bore so as to be movable along an axis of the cylinder bore between:
   a compressed position in which a free end portion of the hollow tube member disposed outside of the cylinder bore is relatively close to the first axial face of the outer cylinder; and
   an extended position in which the free end portion of the hollow tube member is relatively far from the first axial face of the outer cylinder,
wherein the first piston head includes a first axial surface upon which pressurised oleo-pneumatic shock absorber fluid within the oleo chamber acts to force the sliding tube to move from the compressed position to the extended position, the first axial surface having a first surface area,
a second piston comprising a second piston head slidably mounted within the tube bore in sealing engagement to inhibit pressurised oleo-pneumatic shock absorber fluid passing from the oleo chamber beyond the second piston head, wherein the second piston head includes a second axial surface upon which pressurised oleo-pneumatic shock absorber fluid within the oleo chamber acts to force the sliding tube to move from the compressed position to the extended position, the second axial surface having a second surface area;
a piston restraining arrangement configured to limit axial separation between the second piston and the outer cylinder to hold the second piston within the tube bore at a first position as oleo-pneumatic shock absorber fluid within the oleo chamber forces the sliding tube to move from the compressed position to the extended position; and
a first abutment within the tube bore on the opposite side of the second piston head with respect to the oleo chamber, the first abutment being spaced from the second piston head by a first distance when the second piston head is in the first position and the sliding tube is in the extended position, the first abutment being arranged to engage the second piston head as the sliding tube moves from the extended position to the compressed position.

Thus, the aircraft landing gear shock absorber strut according to the first aspect has a second piston head which does not move against the pressurised oleo-pneumatic shock absorber fluid during initial compression of the shock absorber strut. A compressive force applied to the extended shock absorber strut initially compresses the shock absorber strut against the pressurised oleo-pneumatic shock absorber fluid through movement of only the first surface and not the second surface. Thus, the second piston first position is axially stationary relative to the shock absorber outer cylinder during the initial phase of movement. Continued movement of sliding tube towards the compressed condition causes the abutment to engage the second piston head such that continued compressive force applied to the shock absorber strut compresses the shock absorber strut against the pressurised oleo-pneumatic shock absorber fluid through movement of both the first surface and the second surface. Thus during early compression of the shock strut, the effective area of the sliding tube piston is the annular area between its outer diameter and the second piston diameter, which is substantially less than the area of the sliding tube outer diameter, meaning that initial compression load is reduced relative to known arrangements. As such, the shock absorber strut according to the first aspect can increase 2the likelihood of compressing sufficiently to trigger a weight-on-wheels sensor upon a light landing.

The piston restraining arrangement can comprise an elongate, hollow tube located at the axis of the bore, the tube having a first axial end coupled to outer cylinder, and tether element having a first end coupled to the second piston head and a second end region which extends into the hollow tube thought an opening in the second axial end of the hollow tube, the second end region of the tether element including a second abutment arranged to retain the second piston within the tube bore at the first position as oleo-pneumatic shock absorber fluid within the oleo chamber forces the sliding tube to move from the compressed position to the extended position. The hollow tube can therefore take the form of a diaphragm support tube or office support tube and the second piston head can be mounted on the tether element, thereby utilising damping features of a shock absorber strut to serve as the piston restraining arrangement.

The second abutment can comprise a radially enlarged portion of the tether element that is slidably mounted within the hollow tube, wherein the opening has a smaller diameter than the radially enlarged portion such that the radially enlarged portion engages the second axial end of the hollow tube to prevent movement of the second piston head so as to retain the second piston within the tube bore at the first position as oleo-pneumatic shock absorber fluid within the oleo chamber forces the sliding tube to move from the compressed position to the extended position.

The radially enlarged portion can be distinct from tether element and arranged to be coupled to the tether element. This can aid in assembly of the piston restraining arrangement.

Alternatively, the shock absorber sturt can comprise an elongate rod located at the axis of the bore, the rod having a first end coupled to outer cylinder or the hollow tube, the tether element being slidably mounted on the rod, wherein second abutment comprises a radially enlarged portion of one of the elongate rod and the tether element which is arranged to engage the other one of the elongate rod and the tether element to limit axial separation between them so as to retain the second piston within the tube bore at the first position as oleo-pneumatic shock absorber fluid within the oleo chamber forces the sliding tube to move from the compressed position to the extended position.

The opening can comprise a damping orifice.

The sliding tube can comprise a baffle plate on an opposite side of the second piston head with respect to the first abutment, the baffle plate having a second opening sized to permit passage of fluid within the oleo chamber.

Alternatively, the piston restraining arrangement can comprise an elongate rod located at the axis of the bore, the rod having a first end coupled to outer cylinder, the second piston head being slidably mounted on the rod, the rod including a second abutment on an opposite side of the second piston head with respect to the first end of the rod, the second abutment being sized to prevent movement of the second piston head so as to retain the second piston within the tube bore at the first position as oleo-pneumatic shock absorber fluid within the oleo chamber forces the sliding tube to move from the compressed position to the extended position.

The sliding tube can be vented to atmosphere on a far side of the first abutment with respect of the second piston head.

In all embodiments, the first abutment can be arranged to travel a distance of at least 20 mm before contacting the second piston and preferably a distance of at least 30 mm. The first abutment can be arranged to travel no further than 40mm or 50 mm before contacting the second piston.

The tether element can for example comprise a metering pin, piccolo tube, or cylindrical rod.

According to a second aspect of the invention, there is provided an aircraft landing gear assembly comprising:
the aircraft landing gear shock absorber strut according to the first aspect; and
a wheel or other ground contacting assembly coupled to the shock absorber strut.

The landing gear assembly can comprise a side stay, drag stay or plunger lock arrangement coupled to the shock absorber strut and arranged to enable the shock absorber strut to be maintained in a deployed condition relative to an aircraft to which the landing gear assembly is movably coupled.

### Brief Description of the Drawings

Embodiments of the invention will now be described, strictly by way of example only, with reference to the accompanying drawings, of which:
Figure 1 is a diagram of an aircraft;
Figures 2a to 2e are diagrams of an aircraft landing gear assembly;
Figure 3 is a diagram of an aircraft landing gear assembly shock absorber strut according to an embodiment of the invention;
Figure 4 is a diagram of an aircraft landing gear assembly shock absorber strut according to a further embodiment of the invention;
Figure 5 is a diagram of an aircraft landing gear assembly shock absorber strut according to a further embodiment of the invention;
Figure 6 is a diagram of an aircraft landing gear assembly shock absorber strut according to a further embodiment of the invention; and
Figure 7 is a diagram of an aircraft landing gear assembly shock absorber strut according to a further embodiment of the invention.

### Description of Embodiments

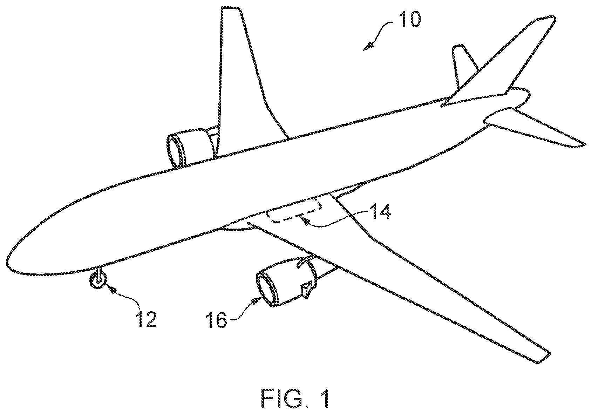

Figure 1 is a diagram of an aircraft 10. The aircraft 10 includes assemblies such as a nose landing gear 12, main landing gear 14 and engines 16. The landing gear 12, 14 each includes a shock absorber strut for damping landing loads and supporting the weight of the aircraft 10 when it is on the ground. The term aircraft as used herein can include aeroplanes, helicopters and the like having mass in excess of 450Kg.

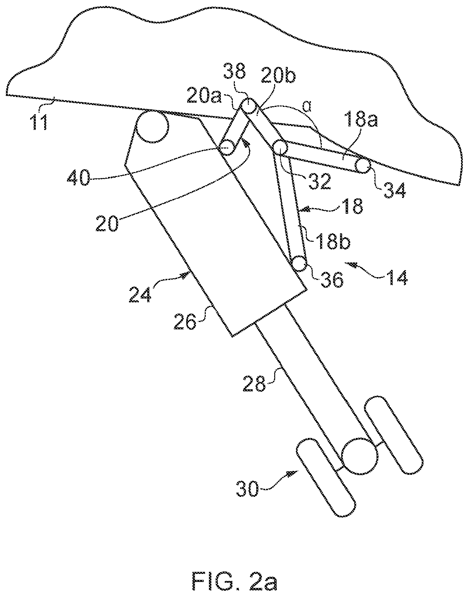

Referring now to Figures 2a to 2e, an aircraft assembly, namely an aircraft landing gear assembly, is shown generally at 14. Figures 2a to 2e are an example of an aircraft landing gear assembly which can include a shock absorber strut according to an embodiment of the invention. It will however be appreciated that shock absorber struts according to embodiments of the invention can be used in a range of types of aircraft landing gear.

The landing gear assembly 14 includes a foldable stay 18, a lock link 20 and a down lock spring assembly 22 mounted to the stay 18 and arranged to urge the lock link 20 to assume a locked state. The landing gear assembly also includes a main shock absorber strut 24, comprising an outer cylinder 26 and a sliding tube 28, as well as a wheel and brake assembly 30.

The aircraft landing gear assembly is movable between a deployed condition, for take-off and landing, and a stowed condition for flight. An actuator (not shown) is provided for moving the landing gear between the deployed condition and the stowed condition. This actuator is known in the art as a retraction actuator, and more than one can be provided. A retraction actuator can have one end coupled to the airframe and another end coupled to the outer cylinder such that extension and retraction of the actuator results in movement of the outer cylinder between deployed and stowed conditions.

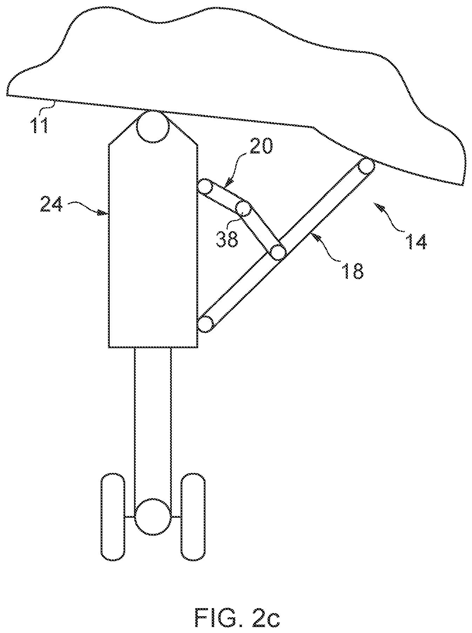

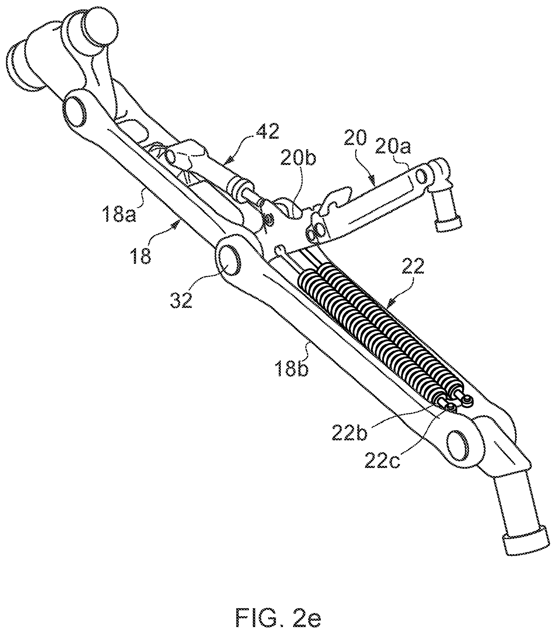

The stay 18 serves to support the orientation of the outer cylinder 26 when the landing gear is in the deployed condition. The stay 18 generally includes a two bar linkage that can be unfolded to assume a generally straight or aligned, over centre condition in which the stay 18 is locked to inhibit movement of the outer cylinder, as shown in Figures 2c and 2e. When the stay is broken, it no longer prevents pivotal movement of the outer cylinder 26 and the outer cylinder 26 can be moved by the retraction actuator towards the stowed condition, as shown in Figure 2a. During flight the stay 18 is arranged in the folded condition, while during take-off and landing the stay 18 is arranged in the generally straight or aligned condition. Some main landing gear assemblies include a pair of stays coupled to a common shock absorber strut.

The stay 18 has an elongate upper stay arm 18a having a lower end defining a pair of lugs pivotally coupled via a pivot pin 32 to a pair of lugs defined at an upper end of an elongate lower stay arm 18b. The stay arms 18a and 18b can therefore pivotally move relative to one another about the pivot pin 32. The upper end of the upper stay arm 18a defines a pair of lugs that are pivotally coupled to a lug of a connector 34 which in turn is pivotally coupled to the airframe 11. The lower end of the lower stay arm 18b defines a pair of lugs pivotally coupled to a lug of a connector 36 which in turn is pivotally coupled to the outer cylinder 26.

The lock link 20 has an elongate upper link arm 20a having a lower end pivotally coupled to an upper end of an elongate lower link arm 20b via a pivot pin 38. The link arms 20a, 20b can therefore pivotally move relative to one another about the pivot pin 38. An upper end of the upper link arm 20a defines a pair of lugs that are pivotally coupled to a lug of a connector 40 which in turn is pivotally coupled to the outer cylinder 26. A lower end of the lower link arm 20b defines a lug that is pivotally coupled to lugs of the stay arms 18a, 18b via the pivot pin 32. Lugs of the upper stay arm 18a are in this example disposed between the lugs of the lower stay arm 18b and the lugs of the lower link arm 20b.

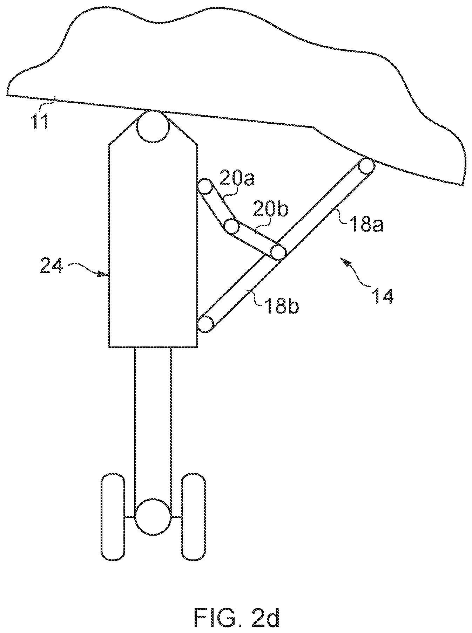

When the lock link 20 is in the locked condition, as illustrated in Figures 2d and 2e, the upper and lower link arms 20a, 20b are generally longitudinally aligned or coaxial, and can be 'over-centre', such that the lock link 20 is arranged to oppose a force attempting to fold the stay 18, so as to move the landing gear assembly from the deployed condition towards the stowed condition. The lock link 20 must be broken to enable the stay 18 to be folded, thereby permitting the outer cylinder 26 to be moved by the retraction actuator towards the stowed condition.

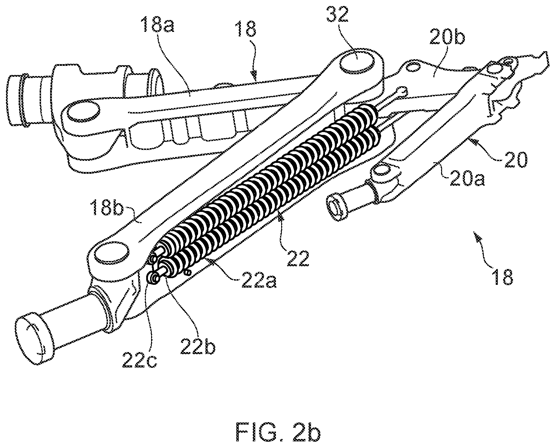

One or more down lock springs 22 are generally provided to assist in moving the landing gear assembly to the deployed condition and locking it in that state by making the lock link. Down lock springs 22 also inhibit the lock link accidentally being unlocked. Down lock springs 22 are generally metal coil springs, which can be coupled between the lock link and another part of the landing gear assembly, such as an arm of the stay assembly, as shown in Figures 2b and 2e.

The spring assembly 22 is arranged to bias the lock link 20 towards the locked condition by way of spring tension. A distal end of the spring 22a is coupled to the lower stay arm 18b via a lower engagement formation 22b which in turn is coupled to an anchor point defined by the lower connector 22c.

The coil spring of the spring assembly 26 is at its shortest when the landing gear assembly is in the deployed condition, as shown in Figure 2e, and at its longest when the landing gear assembly approaches the stowed condition, as shown in Figure 2b. As the landing gear assembly is retracted towards the stowed condition, the spring of each spring assembly extends, resulting in increased spring load and torsional stress.

Referring to Figure 2e, a lock stay actuator 42 is coupled between the upper stay arm 18a and lower link arm 20b and arranged to pivotally move the link arms 20a, b so as to 'lock' and 'unlock' the lock link 20, as illustrated in Figure 2c. The actuator 42 can break the lock link 20 against the down lock spring bias, allowing the landing gear assembly to be folded and stowed as described previously.

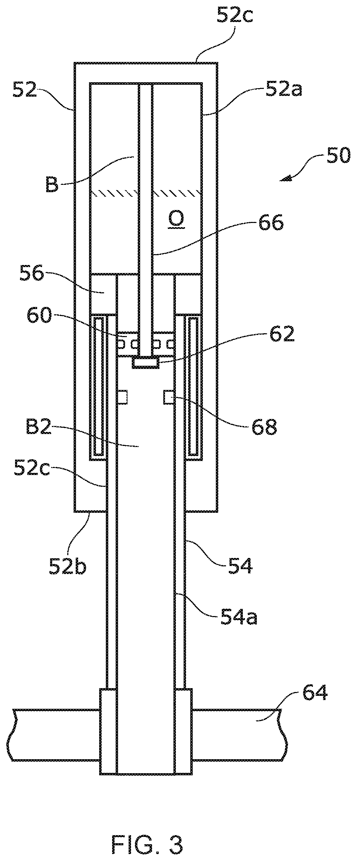

Figure 3 is a diagram of an aircraft landing gear shock absorber strut 50 according to an embodiment of the invention.

The shock absorber strut 50 comprises an outer cylinder 52 having an inner surface 52a defining a cylinder bore B extending into the outer cylinder from a first axial face 52b of the outer cylinder 52. The cylinder 52 is elongate and in this embodiment is of circular cross section.

A sliding tube 54 is movably mounted within the cylinder bore B so as to be movable along the cylinder bore B between a compressed position in which a first free end portion 54a of the sliding tube 54 disposed outside of the bore B is relatively close to the first axial face 52b of the outer cylinder 52 and an extended position in which the first free end portion 54a of the sliding tube 54 is relatively far from the first axial face 52b of the outer cylinder 52.

A piston head 56 is located at the inner end 54b of the sliding tube 54 to slide against the inner surface 52a defining the bore B. The lower end of the cylinder 52 can be provided with a lower bearing assembly sleeve insert to define a lower bearing arranged to act on the outer surface 54c of the sliding tube 54 as it moves between the compressed and extended positions. A gland nut (not shown) can be screwed into the end of the bore to retain the lower bearing assembly. However, in other embodiments, any suitable bearing assembly can be utilised.

The cylinder bore defines an oil and gas chamber O. A space within the bore B between the cylinder 52 and sliding tube 54 defines an annular chamber which varies in size (length) as the sliding tube 54 as it moves between the compressed and extended positions. The oil can comprise any suitable hydraulic liquid and the gas can comprise nitrogen for example.

One or more dynamic seals (not shown) are arranged within the cylinder bore B between the inner surface of the outer cylinder 52 and an outer surface of the sliding tube 54 to inhibit oil within the oil chamber O passing the dynamic seals as the sliding tube 54 moves between the extended and compressed positions. In this embodiment, the dynamic seals are mounted on the lower bearing sleeve assembly.

The piston head 56 can be provided with plurality of damping orifices at least some, but not all, of which are provided with one-way valves such that oil can flow relative easily through them as the shock absorber is compressed but flow is relatively difficult in the reverse direction, in order to provided recoil damping as oil flows from the annular chamber back into the main region of the oil chamber O.

Weight-on-wheels signal is typically sensed by proximity sensors or proximity switches, or by microswitches on older aircraft, driven by a mechanism related to leg closure. There are a number of different mechanisms for the operation of the switch and can for example relate to shock absorber closure, typically by sensing an initial angular movement of an upper torque link.

The sliding tube 54 has an inner surface 54a and defines a second bore B2 which extends through the length of the sliding tube. A second piston head 60 is slidably coupled to the sliding tube inner surface 54a. A piston restraining arrangement 62 is arranged within the second bore B2 to limit the longitudinal distance that the second piston 60 can travel. The piston restraining arrangement 62 is fixed relative to the outer cylinder by means such as an elongate pin 66. The elongate pin can be fixed to the outer cylinder at a second axial face of the outer cylinder 52c located at the opposing end of the outer cylinder to the first free end portion 54a. The elongate pin 66 can extend from the contact point with the outer cylinder 52 and through a point of the second piston head 60 such that the second piston 60 is slidably coupled to the elongate pin 66. The piston restraining arrangement 62 can be fixed to the elongate pin 66 on the opposing axial face of the second piston 60 to the second end portion of the outer cylinder 52c. The piston restraining arrangement 62 can be a disc with a diameter larger than the diameter of the elongate pin 66 and the space within the second piston 60 which houses the elongate pin 66. The elongate pin therefore holds the second piston 60 via the piston restraining member 62 within in shock absorber strut 50. The elongate pin 66 can be any suitable member which provides tension to hold the piston restraining member 62 substantially stationary relative to the outer cylinder 52.

An abutment 68 is arranged within the second bore B2 on the opposing side of the second piston 60 with respect to the outer cylinder bore B. The abutment 68 is fixed relative to the sliding tube 54 to move with it.

As the ground contacting assembly 64 contacts the ground as the aircraft touches down, a counterforce will be exerted against the internal pressure of the chamber O. As the shock absorber strut 50 compresses, the second piston 60 will remain stationary with respect to the outer cylinder 52 and the abutment 68 will move towards the second piston 60. During this stage of compression, the internal pressure of the chamber O reacts compression of the strut via the first piston 56 and not via the second piston 60. As the axial face of the piston head 56 which contacts the oleo chamber O has an area which is less than the cross-sectional area of the bore B, a smaller load is required to produce a compression of the sliding tube 54 in comparison to known arrangements.

As compression of the shock absorber 50 continues, the abutment 68 will contact the second piston 60. The abutment 68 is arranged such that it can contact the second piston 60 without contacting the piston restraining arrangement 62. As second piston 60 is slidably coupled to the elongate pin 66, the second piston 60 travels with the sliding tube 54 with respect to the outer cylinder 54 after contact with the abutment surface 68. The total surface area of the axial face of the second piston 60 and axial face of the first piston 56 is substantially equal to the cross-sectional area of the inner diameter of the bore B. Thus, after the second piston 60 has been "picked up" by the abutment 68, conventional operation of the shock absorber strut will continue.

Additional baffles, valves or orifices may be added as convenient to control or modify the damping characteristics on closure.

In this embodiment the abutment 68 can travel a distance of up to 25 mm or 30 mm from the fully extended position until it contacts the second piston 60, meaning that the strut can be compressed relatively easily for the first 25mm to 30mm of its stroke. The distance moved by the abutments 68 can be set to a larger distance if the intent is to significantly alter the spring curve of the shock absorber.

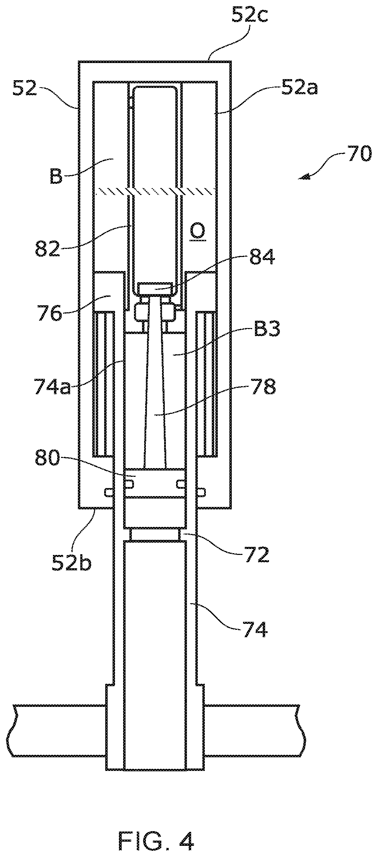

Figure 4 shows a shock absorber strut 70 according to a further embodiment. The strut 70 is similar to the strut 50 of Figure 3 and for brevity the following description will focus on the differences.

The sliding tube 74 defines a bore B3 with an inner surface 74a which extends from the end portion housed within the outer cylinder 52 to an internal abutment 72. The second piston head 80 is coupled to a metering pin 78 at a first end of the metering pin which is closer to the first end portion of the outer cylinder 52b than the second end portion 52c. The metering pin 78 is slidably coupled to the inner surface 74a of the sliding tube bore B3 via the second piston 80. The sliding tube 74 can therefore move between a first position in which the internal abutment 72 does not contact the second piston 80 and a second position in which the internal abutment 72 does contact the second piston 80. The second piston 80 can be provided with one or more first dynamic seals arranged such that the second piston 80 can move relative to the sliding tube 74 while maintaining a fluid seal between the second piston 80 and the inner wall of the sliding tube 74a.

The piston restraining arrangement 82 in this embodiment includes a diaphragm support tube, also known as an orifice support tube, with a first end which is fixed to the outer cylinder 52 at the second end portion 52b. The sliding tube bore B3 is sized to receive the diaphragm support tube 82. A distal end of the metering pin 78 with respect to the second piston 80 is provided with a radially enlarged disc 84 or other type of head formation. The diaphragm support tube 82 has an internal radius which allows the disc 84 to move axially within the support tube 82. The second end of the diaphragm support tube 82, which is closer to the sliding tube 74 than the first end of the diaphragm support tube, is arranged to allow the metering pin 78 to pass through but restrict the disc 84 from passing through. The diaphragm support tube 82 therefore limits the movement of the second piston head 80. A second axial end face of the diaphragm support tube 82 defines a second opening which is smaller than the opening which limits passage of the disc 84, the second opening being sized to cooperate with the metering pin 78 for the purpose of compression damping.

By using the diaphragm support tube and the metering pin as part of the load connection from the shock absorber, the likelihood of a lack of compression damping with an unseparated shock absorber is reduced.

When the strut is fully extended, there is no contact between the second piston 80 and the internal abutment 72. Initial ground contact will produce a counterforce on the sliding tube 74 which acts against the internal pressure of the chamber O. As the area of the piston head 76 of the sliding tube is substantially smaller than that of the bore B, a lower compression load is required for motion of the sliding tube 74 in comparison to known arrangements.

As the landing load increases, the sliding tube will move further to the compressed position which will result in the internal abutment 72 contacting and 'picking up' the second piston 80. After that, the internal abutment 72 will act on the floating piston 80, resulting in movement of the metering pin 78 into the diaphragm support tube 82. The combined surface area of the second piston head 80 and sliding tube piston head 76 is larger than that of just the sliding tube piston head 76 leading to a conventional shock absorber operation.

With the arrangement described the metering pin 78 is not fixed relative the sliding tube 74 meaning that the metering pin diaphragm seal becomes dynamic for a limited travel as the second piston 80 moves relative to the sliding tube 74. The abutment 72 is arranged so that it does not seal across the sliding tube 74, for pressure equalisation as the sliding tube 74 moves relative to the second piston 80. Specific construction of the orifice assembly onto the diaphragm support tube can be dependent on gas migration (bubble through) requirements.

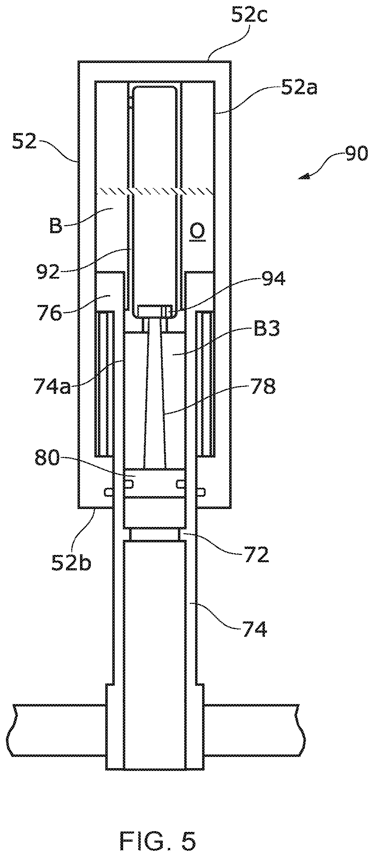

Figure 5 shows a shock absorber strut 90 according to a further embodiment. The strut 90 is similar to the strut 70 of Figure 4 and for brevity the following description will focus on the differences.

In this embodiment, the disc 94 includes an oil passage extending axially through it and positioned to enable fluid to pass from the bore B3 to the main chamber while the disc 84 is seated in the restrained position at the second end of the diaphragm support tube 92.

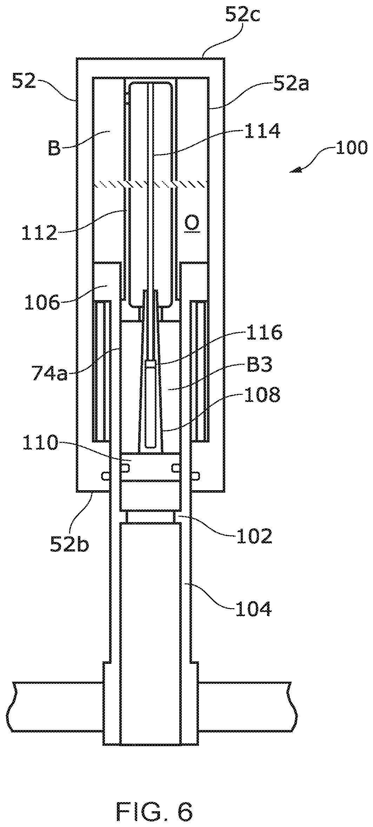

Figure 6 shows a shock absorber strut 100 according to a further embodiment. The strut 100 is similar to the strut 90 of Figure 5 and for brevity the following description will focus on the differences.

A tensioning member 114 is located within the diaphragm support tube 112. The tensioning member 114 is fixed to the diagram support tube 112 or outer cylinder 52 at the second end of the outer cylinder 52c and extends through the opposite end of the diaphragm support tube 82. The tensioning member 114 is partially located into a hollow bore of the metering pin 108. A disc 116 is coupled to the tensioning member 114 at the end located within the metering pin 108. The disc is slidably coupled to the internal surface of the bore of the metering pin 108. The disc 116 and tensioning member 114 therefore serve as the piston restraining arrangement, limiting axial movement of the second piston 110 away from the second end 52c of the outer cylinder.

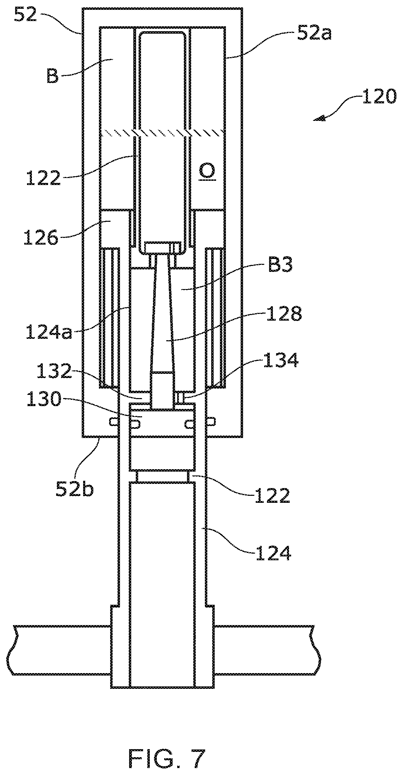

Figure 7 shows a shock absorber strut 120 according to a further embodiment. The strut 120 is similar to the strut 90 of Figure 5 and for brevity the following description will focus on the differences.

The sliding tube 124 comprises a baffle 132 with at least one orifice 134. The baffle 132 is arranged within and across the sliding tube bore B3 and has an opening which receives the metering pin 128. The baffle 132 is coupled to the inner surface of the sliding tube 124a so that it is fixed with respect to the sliding tube 74. The baffle 132 largely restores any damping effect lost by a reduction in effective sliding tube cross section area which could reduce the volume of oil displaced. The baffle 132 can be any suitable structure to restrict the flow of displaced oil, such as a plate.

In any embodiment a metering pin can be replaced by a 'piccolo tube' (a hollow tube with axially spaced radial holes to act in a similar way to a metering pin by changing the area of the fluid flow path with compression travel as the holes in the tube pass the compression orifice). Alternatively, the metering pin can be a plain cylindrical element, such that it does not change flow area on compression. Each of these examples can be described as a tether element.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parenthesis shall not be construed as limiting the claims. The word "comprising" does not exclude the presence of elements or steps other than those listed in any claim or the specification as a whole. The singular reference of an element does not exclude the plural reference of such elements and vice-versa. Parts of the invention can be implemented by means of hardware comprising several distinct elements. In a device claim enumerating several parts, several of these parts can be embodied by one and the same item of hardware. The mere fact that certain measures are recited in mutually different dependent claims does not indicate that a combination of these measures cannot be used to advantage.

## Claims

1. An aircraft landing gear shock absorber strut (50, 70, 90, 100, 120) comprising:
an outer cylinder (52) having an inner surface defining a cylinder bore extending into the outer cylinder from a first axial face of the outer cylinder, the cylinder bore defining an oleo chamber for containing pressurised oleo-pneumatic shock absorber fluid;
a sliding tube (54) including a hollow tube member coupled to first piston head (56), the hollow tube member defining a tube bore, the first piston head being movably mounted within the cylinder bore so as to be movable along an axis of the cylinder bore between:
a compressed position in which a free end portion of the hollow tube member disposed outside of the cylinder bore is relatively close to the first axial face of the outer cylinder; and
an extended position in which the free end portion of the hollow tube member is relatively far from the first axial face of the outer cylinder,
wherein the first piston head includes a first axial surface upon which pressurised oleo-pneumatic shock absorber fluid within the oleo chamber acts to force the sliding tube to move from the compressed position to the extended position, the first axial surface having a first surface area;
a second piston comprising a second piston head (60, 80, 110) slidably mounted within the tube bore in sealing engagement to inhibit pressurised oleo-pneumatic shock absorber fluid passing from the oleo chamber beyond the second piston head, wherein the second piston head includes a second axial surface upon which pressurised oleo-pneumatic shock absorber fluid within the oleo chamber acts to force the sliding tube to move from the compressed position to the extended position, the second axial surface having a second surface area;
a piston restraining arrangement (62,82) configured to limit axial separation between the second piston and the outer cylinder to retain the second piston within the tube bore at a first position as oleo-pneumatic shock absorber fluid within the oleo chamber forces the sliding tube to move from the compressed position to the extended position; and
a first abutment (68, 72) within the tube bore on the opposite side of the second piston head with respect to the oleo chamber, the first abutment being spaced from the second piston head by a first distance when the second piston head is in the first position and the sliding tube is in the extended position, the first abutment being arranged to engage the second piston head as the sliding tube moves from the extended position to the compressed position.

2. The aircraft landing gear shock absorber strut according to claim 1, wherein the piston restraining arrangement comprises an elongate, hollow tube located at the axis of the bore, the tube having a first axial end coupled to outer cylinder, and a tether pin having a first end coupled to the second piston head and a second end region which extends into the hollow tube through an opening in the second axial end of the hollow tube, the second end region of the tether element including a second abutment arranged to retain the second piston within the tube bore at the first position as oleo-pneumatic shock absorber fluid within the oleo chamber forces the sliding tube to move from the compressed position to the extended position.

3. The aircraft landing gear shock absorber strut according to claim 2, wherein the hollow tube is a diaphragm support tube or office support tube and the second piston head is mounted on the tether element.

4. The aircraft landing gear shock absorber strut according to claim 2 or 3, wherein the second abutment comprises a radially enlarged portion of the tether elementthat is slidably mounted within the hollow tube, wherein the opening has a smaller diameter than the radially enlarged portion such that the radially enlarged portion engages the second axial end of the hollow tube to prevent movement of the second piston head so as to retain the second piston within the tube bore at the first position as oleo-pneumatic shock absorber fluid within the oleo chamber forces the sliding tube to move from the compressed position to the extended position.

5. The aircraft landing gear shock absorber strut according to claim 4, wherein the radially enlarged portion is distinct from the tether element and is arranged to be coupled to the tether element.

6. The aircraft landing gear shock absorber strut according any of claims 2 to 5, further comprising an elongate rod located at the axis of the bore, the rod having a first end coupled to outer cylinder or the hollow tube, the tether element being slidably mounted on the rod, wherein second abutment comprises a radially enlarged portion of one of the elongate rod and the tether element which is arranged to engage the other one of the elongate rod and the tether element to limit axial separation between them so as to retain the second piston within the tube bore at the first position as oleo-pneumatic shock absorber fluid within the oleo chamber forces the sliding tube to move from the compressed position to the extended position.

7. The aircraft landing gear shock absorber strut according to any of claims 2 to 6, wherein the opening comprises a damping orifice.

8. The aircraft landing gear shock absorber strut according to any preceding claim, wherein the sliding tube comprises a baffle plate on an opposite side of the second piston head with respect to the first abutment, the baffle plate having a second opening sized to permit passage of fluid within the oleo chamber.

9. The aircraft landing gear shock absorber strut according to claim 1, wherein the piston restraining arrangement comprises an elongate rod located at the axis of the bore, the rod having a first end coupled to outer cylinder, the second piston head being slidably mounted on the rod, the rod including a second abutment on an opposite side of the second piston head with respect to the first end of the rod, the second abutment being sized to prevent movement of the second piston head so as to retain the second piston within the tube bore at the first position as oleo-pneumatic shock absorber fluid within the oleo chamber forces the sliding tube to move from the compressed position to the extended position.

10. The aircraft landing gear shock absorber strut according to any preceding claim, wherein the sliding tube is vented to atmosphere on an opposite side of the first abutment with respect of the second piston head.

11. The aircraft landing gear shock absorber strut according to any preceding claim, wherein the first abutment is arranged to travel a distance of at least 20 mm before contacting the second piston.

12. An aircraft landing gear assembly comprising:
the aircraft landing gear shock absorber strut according to any preceding claim; and
a wheel assembly or other ground contacting assembly coupled to the shock absorber strut.

13. The aircraft landing gear assembly according to claim 12, comprising a side stay, drag stay or plunger lock arrangement coupled to the shock absorber strut and arranged to enable the shock absorber strut to be maintained in a deployed condition relative to an aircraft to which the landing gear assembly is movably coupled.

14. The aircraft landing gear assembly according to claim 12 or 13, further comprising a main landing gear assembly.

15. An aircraft comprising one or more aircraft landing gear assemblies according to any of claims 12 to 14.

## Patentansprüche

1. Stoßdämpferstrebe (50, 70, 90, 100, 120) für Flugzeugfahrwerk, umfassend:
einen Außenzylinder (52), der eine Innenfläche aufweist, die eine Zylinderbohrung definiert, die sich von einer ersten axialen Stirnfläche des Außenzylinders in den Außenzylinder erstreckt, wobei die Zylinderbohrung eine Oleo-Kammer zum Enthalten von unter Druck stehendem oleopneumatischen Stoßdämpferfluid definiert;
ein Gleitrohr (54), das ein hohles Rohrelement einschließt, das mit einem ersten Kolbenkopf (56) gekoppelt ist, wobei das hohle Rohrelement eine Rohrbohrung definiert, der erste Kolbenkopf beweglich innerhalb der Zylinderbohrung montiert ist, um entlang einer Achse der Zylinderbohrung beweglich zu sein zwischen:
einer komprimierten Position, in der ein freier Endabschnitt des hohlen Rohrelements, der außerhalb der Zylinderbohrung angeordnet ist, relativ nahe an der ersten axialen Stirnfläche des Außenzylinders liegt; und
einer ausgefahrenen Position, in der der freie Endabschnitt des hohlen Rohrelements relativ weit von der ersten axialen Stirnfläche des Außenzylinders entfernt ist,
wobei der erste Kolbenkopf eine erste axiale Oberfläche einschließt, auf die unter Druck stehendes oleopneumatisches Stoßdämpferfluid innerhalb der Oleo-Kammer einwirkt, um das Gleitrohr zu zwingen, sich von der komprimierten Position in die ausgefahrene Position zu bewegen, wobei die erste axiale Oberfläche einen ersten Oberflächenbereich aufweist;
einen zweiten Kolben, umfassend
einen zweiten Kolbenkopf (60, 80, 110), der verschiebbar, in dichtendem Eingriff innerhalb der Rohrbohrung montiert ist, um zu verhindern, dass unter Druck stehendes oleopneumatisches Stoßdämpferfluid über den zweiten Kolbenkopf hinaus aus der Oleo-Kammer fließt, wobei der zweite Kolbenkopf eine zweite axiale Oberfläche einschließt, auf die unter Druck stehendes öi-pneumatisches Stoßdämpferfluid innerhalb der Oleo-Kammer einwirkt, um das Gleitrohr zu zwingen, sich von der komprimierten Position in die ausgefahrene Position zu bewegen, wobei die zweite axiale Oberfläche einen zweiten Oberflächenbereich aufweist;
eine Kolbenrückhalteanordnung (62, 82), die dazu ausgebildet ist, die axiale Trennung zwischen dem zweiten Kolben und dem Außenzylinder zu begrenzen, um den zweiten Kolben innerhalb der Rohrbohrung in einer ersten Position zu halten, während oleopneumatisches Stoßdämpferfluid innerhalb der Oleo-Kammer das Gleitrohr zwingt, sich von der komprimierten Position in die ausgefahrene Position zu bewegen; und
ein erstes Widerlager (68, 72) innerhalb der Rohrbohrung auf der Seite des zweiten Kolbenkopfes, die der Oleo-Kammer gegenüberliegt, wobei das erste Widerlager vom zweiten Kolbenkopf um einen ersten Abstand beabstandet ist, wenn der zweite Kolbenkopf in der ersten Position ist und das Gleitrohr in der ausgefahrenen Position ist, wobei das erste Widerlager angeordnet ist, um den zweiten Kolbenkopf in Eingriff zu bringen, wenn sich das Gleitrohr von der ausgefahrenen Position in die komprimierte Position bewegt.

2. Stoßdämpferstrebe für Flugzeugfahrwerk nach Anspruch 1, wobei die Kolbenrückhalteanordnung ein längliches, hohles Rohr umfasst, das sich an der Achse der Bohrung befindet, das Rohr aufweisend ein erstes axiales Ende, das mit dem Außenzylinder gekoppelt ist, und einen Haltestift, der ein erstes Ende, das mit dem zweiten Kolbenkopf gekoppelt ist, und einen zweiten Endbereich, der sich durch eine Öffnung im zweiten axialen Ende des hohlen Rohrs in das hohle Rohr erstreckt, aufweist, wobei der zweite Endbereich des Halteelements ein zweites Widerlager einschließt, das angeordnet ist, um den zweiten Kolben innerhalb der Rohrbohrung in der ersten Position zu halten, während oleopneumatisches Stoßdämpferfluid innerhalb der Oleo-Kammer das Gleitrohr zwingt, sich von der komprimierten Position in die ausgefahrene Position zu bewegen.

3. Stoßdämpferstrebe für Flugzeugfahrwerk nach Anspruch 2, wobei das hohle Rohr ein Membranträgerrohr oder ein Drosselträgerrohr ist und der zweite Kolbenkopf an dem Halteelement montiert ist.

4. Stoßdämpferstrebe für Flugzeugfahrwerk nach Anspruch 2 oder 3, wobei das zweite Widerlager einen radial vergrößerten Abschnitt des Halteelements umfasst, der verschiebbar innerhalb des Hohlrohrs montiert ist,
wobei die Öffnung einen kleineren Durchmesser als der radial vergrößerte Abschnitt aufweist, sodass der radial vergrößerte Abschnitt das zweite axiale Ende des hohlen Rohrs in Eingriff bringt, um eine Bewegung des zweiten Kolbenkopfes zu verhindern, um den zweiten Kolben innerhalb der Rohrbohrung in der ersten Position zu halten, während oleopneumatisches Stoßdämpferfluid innerhalb der Oleo-Kammer das Gleitrohr zwingt, sich von der komprimierten Position in die ausgefahrene Position zu bewegen.

5. Stoßdämpferstrebe für Flugzeugfahrwerk nach Anspruch 4, wobei sich der radial vergrößerte Abschnitt von dem Halteelement unterscheidet und angeordnet ist, um mit dem Halteelement gekoppelt zu werden.

6. Stoßdämpferstrebe für Flugzeugfahrwerk nach einem der Ansprüche 2 bis 5, weiter umfassend eine längliche Stange, die sich an der Achse der Bohrung befindet, wobei die Stange ein erstes Ende aufweist, das mit dem Außenzylinder oder dem hohlen Rohr gekoppelt ist, wobei das Halteelement verschiebbar auf der Stange montiert ist,
wobei das zweite Widerlager einen radial vergrößerten Abschnitt von einem von der länglichen Stange und dem Halteelement umfasst, der angeordnet ist, um das Andere von der länglichen Stange und dem Halteelement in Eingriff zu bringen, um die axiale Trennung zwischen ihnen zu begrenzen, um den zweiten Kolben innerhalb der Rohrbohrung in der ersten Position zu halten, während oleopneumatisches Stoßdämpferfluid innerhalb der Oleo-Kammer das Gleitrohr zwingt, sich von der komprimierten Position in die ausgefahrene Position zu bewegen.

7. Stoßdämpferstrebe für Flugzeugfahrwerk nach einem der Ansprüche 2 bis 6, wobei die Öffnung eine Drosselöffnung umfasst.

8. Stoßdämpferstrebe für Flugzeugfahrwerk nach einem vorstehenden Anspruch, wobei das Gleitrohr auf einer Seite des zweiten Kolbenkopfes, die dem ersten Widerlager gegenüberliegt, eine Prallplatte umfasst, wobei die Prallplatte eine zweite Öffnung aufweist, die dimensioniert ist, um einen Durchfluss von Fluid innerhalb der Oleo-Kammer zu ermöglichen.

9. Stoßdämpferstrebe für Flugzeugfahrwerk nach Anspruch 1, wobei die Kolbenrückhalteanordnung eine längliche Stange umfasst, die sich an der Achse der Bohrung befindet, wobei die Stange ein erstes Ende aufweist, das mit dem Außenzylinder gekoppelt ist, wobei der zweite Kolbenkopf verschiebbar auf der Stange montiert ist, wobei die Stange auf einer Seite des zweiten Kolbenkopfes, die dem ersten Ende der Stange gegenüberliegt, ein zweites Widerlager einschließt, wobei das zweite Widerlager dimensioniert ist, um eine Bewegung des zweiten Kolbenkopfes zu verhindern, um den zweiten Kolben innerhalb der Rohrbohrung in der ersten Position zu halten, während oleopneumatisches Stoßdämpferfluid innerhalb der Oleo-Kammer das Gleitrohr zwingt, sich von der komprimierten Position in die ausgefahrene Position zu bewegen.

10. Stoßdämpferstrebe für Flugzeugfahrwerk nach einem vorstehenden Anspruch, wobei das Gleitrohr auf einer Seite des ersten Widerlagers, die dem zweiten Kolbenkopf gegenüberliegt, zur Atmosphäre hin entlüftet ist.

11. Stoßdämpferstrebe für Flugzeugfahrwerk nach einem vorstehenden Anspruch, wobei das erste Widerlager angeordnet ist, um einen Abstand von mindestens 20 mm zurückzulegen, bevor es den zweiten Kolben berührt.

12. Flugzeugfahrwerksbaugruppe, umfassend:
die Stoßdämpferstrebe für Flugzeugfahrwerk nach einem vorstehenden Anspruch; und
eine Radbaugruppe oder eine andere bodenberührende Baugruppe, die mit der Stoßdämpferstrebe gekoppelt ist.

13. Flugzeugfahrwerksbaugruppe nach Anspruch 12, umfassend eine Seitenstrebe, eine Schleppstrebe oder eine Kolbenstangenverriegelungsanordnung, die mit der Stoßdämpferstrebe gekoppelt ist und angeordnet ist, um zu ermöglichen, dass die Stoßdämpferstrebe relativ zu einem Flugzeug, mit dem die Fahrwerksbaugruppe beweglich gekoppelt ist, in einem einsatzbereiten Zustand gehalten werden kann.

14. Flugzeugfahrwerksbaugruppe nach Anspruch 12 oder 13, weiter umfassend eine Hauptfahrwerksbaugruppe.

15. Flugzeug, umfassend eine oder mehrere Flugzeugfahrwerksbaugruppen nach einem der Ansprüche 12 bis 14.

## Revendications

1. Jambe (50, 70, 90, 100, 120) d'amortisseur de train d'atterrissage d'aéronef comprenant :
un cylindre externe (52) présentant une surface interne définissant un alésage de cylindre s'étendant dans le cylindre externe à partir d'une première face axiale du cylindre externe, l'alésage de cylindre définissant une chambre oléo pour contenir un fluide amortisseur oléo-pneumatique sous pression ;
un tube coulissant (54) incluant un organe de tube creux couplé à une première tête de piston (56), l'organe de tube creux définissant un alésage de tube, la première tête de piston étant montée de manière mobile à l'intérieur de l'alésage de cylindre de manière à être mobile le long d'un axe de l'alésage de cylindre entre :
une position comprimée dans laquelle une portion d'extrémité libre de l'organe de tube creux disposé à l'extérieur de l'alésage de cylindre est relativement proche de la première face axiale du cylindre externe ; et
une position étendue dans laquelle la portion d'extrémité libre de l'organe de tube creux est relativement éloignée de la première face axiale du cylindre externe ;
dans laquelle la première tête de piston inclut une première surface axiale sur laquelle le fluide amortisseur oléo-pneumatique sous pression à l'intérieur de la chambre oléo agit pour forcer le tube coulissant à se déplacer de la position comprimée à la position étendue, la première surface axiale présentant une première superficie ;
un deuxième piston comprenant
une deuxième tête de piston (60, 80, 110) montée de manière coulissante à l'intérieur de l'alésage de tube en prise d'étanchéité pour empêcher le fluide amortisseur oléo-pneumatique sous pression de transiter depuis la chambre oléo au-delà de la deuxième tête de piston, dans laquelle la deuxième tête de piston inclut une deuxième surface axiale sur laquelle le fluide amortisseur oléo-pneumatique sous pression à l'intérieur de la chambre oléo agit pour forcer le tube coulissant à se déplacer de la position comprimée à la position étendue, la deuxième surface axiale présentant une deuxième superficie ;
un agencement de retenue de piston (62, 82)
configuré pour limiter une séparation axiale entre le deuxième piston et le cylindre externe pour retenir le deuxième piston à l'intérieur de l'alésage de tube à une première position lorsque le fluide amortisseur oléo-pneumatique à l'intérieur de la chambre oléo force le tube coulissant à se déplacer de la position comprimée à la position étendue ; et
une première butée (68, 72) à l'intérieur de l'alésage de tube sur le côté opposé de la deuxième tête de piston par rapport à la chambre oléo, la première butée étant espacée de la deuxième tête de piston d'une première distance lorsque la deuxième tête de piston est dans la première position et le tube coulissant est dans la position étendue, la première butée étant agencée pour venir en prise avec la deuxième tête de piston lorsque le tube coulissant se déplace de la position étendue à la position comprimée.

2. Jambe d'amortisseur de train d'atterrissage d'aéronef selon la revendication 1, dans laquelle l'agencement de retenue de piston comprend un tube creux allongé situé au niveau de l'axe de l'alésage, le tube présentant une première extrémité axiale couplée à un cylindre externe, et une goupille de fixation présentant une première extrémité couplée à la deuxième tête de piston et une deuxième région d'extrémité qui s'étend dans le tube creux à travers une ouverture dans la deuxième extrémité axiale du tube creux, la deuxième région d'extrémité de l'élément de fixation incluant une deuxième butée agencée pour retenir le deuxième piston à l'intérieur de l'alésage de tube à la première position lorsque le fluide amortisseur oléo-pneumatique à l'intérieur de la chambre oléo force le tube coulissant à se déplacer de la position comprimée à la position étendue.

3. Jambe d'amortisseur de train d'atterrissage d'aéronef selon la revendication 2, dans laquelle le tube creux est un tube de support de diaphragme ou un tube de support de poste et la deuxième tête de piston est montée sur l'élément de fixation.

4. Jambe d'amortisseur de train d'atterrissage d'aéronef selon la revendication 2 ou la revendication 3, dans laquelle la deuxième butée comprend une portion agrandie radialement de l'élément de fixation qui est montée de manière coulissante à l'intérieur du tube creux, dans laquelle l'ouverture présente un diamètre plus petit que la portion agrandie radialement de sorte que la portion agrandie radialement vient en prise avec la deuxième extrémité axiale du tube creux pour empêcher un mouvement de la deuxième tête de piston de manière à retenir le deuxième piston à l'intérieur de l'alésage de tube à la première position lorsque le fluide amortisseur oléo-pneumatique à l'intérieur de la chambre oléo force le tube coulissant à se déplacer de la position comprimée à la position étendue.

5. Jambe d'amortisseur de train d'atterrissage d'aéronef selon la revendication 4, dans laquelle la portion agrandie radialement est distincte de l'élément de fixation et est agencée pour être couplée à l'élément de fixation.

6. Jambe d'amortisseur de train d'atterrissage d'aéronef selon l'une quelconque des revendications 2 à 5, comprenant en outre une tige allongée située au niveau de l'axe de l'alésage, la tige présentant une première extrémité couplée au cylindre externe ou au tube creux, l'élément de fixation étant monté de manière coulissante sur la tige, dans laquelle une deuxième butée comprend une portion agrandie radialement de l'un de la tige allongée et de l'élément de fixation qui est agencée pour venir en prise avec l'autre de la tige allongée et de l'élément de fixation pour limiter une séparation axiale entre eux de manière à retenir le deuxième piston à l'intérieur de l'alésage de tube à la première position lorsque le fluide amortisseur oléo-pneumatique à l'intérieur de la chambre oléo force le tube coulissant à se déplacer de la position comprimée à la position étendue.

7. Jambe d'amortisseur de train d'atterrissage d'aéronef selon l'une quelconque des revendications 2 à 6, dans laquelle l'ouverture comprend un orifice d'amortissement.

8. Jambe d'amortisseur de train d'atterrissage d'aéronef selon une quelconque revendication précédente, dans laquelle le tube coulissant comprend une plaque de déflecteur sur un côté opposé de la deuxième tête de piston par rapport à la première butée, la plaque de déflecteur présentant une deuxième ouverture dimensionnée pour permettre un passage de fluide à l'intérieur de la chambre oléo.

9. Jambe d'amortisseur de train d'atterrissage d'aéronef selon la revendication 1, dans laquelle l'agencement de retenue de piston comprend une tige allongée située au niveau de l'axe de l'alésage, la tige présentant une première extrémité couplée au cylindre externe, la deuxième tête de piston étant montée de manière coulissante sur la tige, la tige incluant une deuxième butée sur un côté opposé de la deuxième tête de piston par rapport à la première extrémité de la tige, la deuxième butée étant dimensionnée pour empêcher un mouvement de la deuxième tête de piston de manière à retenir le deuxième piston à l'intérieur de l'alésage de tube à la première position lorsque le fluide amortisseur oléo-pneumatique à l'intérieur de la chambre oléo force le tube coulissant à se déplacer de la position comprimée à la position étendue.

10. Jambe d'amortisseur de train d'atterrissage d'aéronef selon une quelconque revendication précédente, dans laquelle le tube coulissant est ventilé vers l'atmosphère sur un côté opposé de la première butée par rapport à la deuxième tête de piston.

11. Jambe d'amortisseur de train d'atterrissage d'aéronef selon une quelconque revendication précédente, dans laquelle la première butée est agencée pour parcourir une distance d'au moins 20 mm avant d'entrer en contact avec le deuxième piston.

12. Ensemble train d'atterrissage d'aéronef comprenant :
la jambe d'amortisseur de train d'atterrissage d'aéronef selon une quelconque revendication précédente ; et
un ensemble roue ou un autre ensemble de contact à la terre couplé à la jambe d'amortisseur.

13. Ensemble train d'atterrissage d'aéronef selon la revendication 12, comprenant un agencement contrefiche latérale, contrefiche longitudinale ou de verrouillage de plongeur couplé à la jambe d'amortisseur et agencé pour permettre de maintenir la jambe d'amortisseur dans un état déployé par rapport à un aéronef auquel l'ensemble train d'atterrissage est couplé de façon mobile.

14. Ensemble train d'atterrissage d'aéronef selon la revendication 12 ou la revendication 13, comprenant en outre un ensemble train d'atterrissage principal.

15. Aéronef comprenant un ou plusieurs ensembles train d'atterrissage d'aéronef selon l'une quelconque des revendications 12 à 14.
